# EUROPÄISCHE PATENTSCHRIFT

(11) **EP 0 837 832 B1**
(45) Veröffentlichungstag und Bekanntmachung des Hinweises auf die Patenterteilung: **20.10.1999**
(21) Anmeldenummer: 96922898.0
(22) Anmeldetag: 02.07.1996
(51) Int. Cl.: C01B 33/16, C04B 14/06, C04B 30/00

(54) **VERFAHREN ZUR HERSTELLUNG VON ORGANISCH MODIFIZIERTEN AEROGELEN UND DEREN VERWENDUNG**
PROCESS FOR PREPARING ORGANICALLY MODIFIED AEROGELS AND USE THEREOF
PROCEDE DE PRODUCTION D'AEROGELS ORGANIQUEMENT MODIFIES ET LEUR UTILISATION

(30) Priorität: 10.07.1995 DE 19525021
(43) Veröffentlichungstag der Anmeldung: 29.04.1998
(73) Patentinhaber: CABOT CORPORATION, Boston, MA 02109 (US)
(72) Erfinder: SCHWERTFEGER, Fritz, D-60529 Frankfurt am Main (DE); ZIMMERMANN, Andreas, D-64347 Griesheim (DE)
(74) Vertreter: Luderschmidt, Schüler & Partner GbR
(86) Internationale Anmeldenummer: EP9602894
(87) Internationale Veröffentlichungsnummer: WO9703017

(56) Entgegenhaltungen:
- EP-A- 0 658 513
- US-A- 5 110 784
- JOURNAL OF CHROMATOGRAPHIE, Bd. 11, Nr. 16, 1.Januar 1988, Seiten 3375-3384, XP000603178 KENNETH D. MC MURTREY: "Reaction of silica gel with trimethylsilyl donors under conditions useful forend-capping HPLC bonded phase packings"

## Beschreibung

Die Erfindung betrifft ein Verfahren zur Herstellung von organisch modifizierten SiO₂-Aerogelen und deren Verwendung.

Aerogele, insbesondere solche mit Porositäten über 60% und Dichten unter 0,6 g/cm³, weisen eine äußerst geringe thermische Leitfähigkeit auf und finden deshalb Anwendung als Wärmeisolationsmaterial wie z. B. in der EP-A-0 171 722 beschrieben.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel vielfach auch als Xerogel. Es ist anzumerken, daß es sich bei den erfindungsgemäßen Gelen um Aerogele, im Sinne von Gel mit Luft als Dispersionsmittel handelt. Da diese Gele durch unterkritische Trocknung hergestellt werden, könnten sie aber auch als Xerogele bezeichnet werden.

SiO₂-Aerogele können beispielsweise durch saure Hydrolyse von Tetraethylorthosilikat in Ethanol hergestellt werden. Bei der Hydrolyse entsteht ein Gel, dessen Struktur unter anderem durch die Temperatur, den pH-Wert und die Dauer des Gelierprozesses bestimmt wird. Jedoch kollabiert die Gelstruktur im allgemeinen bei der Trocknung der nassen Gele, da die bei der Trocknung auftretenden Kapillarkräfte extrem groß sind. Der Gelkollaps kann dadurch verhindert werden, daß die Trocknung oberhalb der kritischen Temperatur und des kritischen Druckes des Lösungsmittels durchgeführt wird. Da in diesem Bereich die Phasengrenze flüssig/gasförmig verschwindet, entfallen auch die Kapillarkräfte und das Gel verändert sich während der Trocknung nicht, d. h. es tritt auch kein Schrumpfen des Gels während der Trocknung auf. Auf dieser Trocknungstechnik basierende Herstellungsverfahren sind z. B. aus der EP-A-0 396 076 oder der WO 92/03378 bekannt. Diese Technik erfordert aber, beispielsweise bei der Verwendung von Ethanol, eine Temperatur von etwa 240°C und Drücke von über 60 bar. Der Austausch von Ethanol gegen C0₂ vor der Trocknung erniedrigt zwar die Trocknungstemperatur auf ca. 30°C, der benötigte Druck liegt dann aber bei über 70 bar.

Eine Alternative zu obiger Trocknung bietet ein Verfahren zur unterkritischen Trocknung von SiO₂-Gelen, wenn diese vor der Trocknung mit einem chlorhaltigen Silylierungsmittel umgesetzt werden. Das SiO₂-Gel kann dabei beispielsweise durch saure Hydrolyse von Tetraalkoxysilanen, bevorzugt Tetraethoxysilan (TEOS), in einem geeigneten organischen Lösungsmittel, bevorzugt Ethanol, mittels Wasser erhalten werden. Nach Austausch des Lösungsmittels gegen ein geeignetes organisches Lösungsmittel wird in einem weiteren Schritt das erhaltene Gel mit einem chlorhaltigen Silylierungsmittel umgesetzt. Als Silylierungsmittel werden dabei aufgrund ihrer Reaktivität bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend aus einem organischen Lösungsmittel heraus an der Luft getrocknet werden. Damit können Aerogele mit Dichten unter 0,4 g/cm³ und Porositäten über 60% erreicht werden.
Das auf dieser Trocknungstechnik basierende Herstellungsverfahren wird ausführlich in der WO 94/25149 beschrieben.

Die oben beschriebenen Gele können darüber hinaus vor der Trocknung in der alkohol-wässrigen Lösung mit Tetraalkoxysilanen versetzt und gealtert werden, um die Gelnetzwerkstärke zu erhöhen, wie z. B. in der WO 92/20623 offenbart.

Die bei den oben beschriebenen Verfahren als Ausgangsmaterialien verwendeten Tetraalkoxysilane stellen jedoch einen außerordentlich hohen Kostenfaktor dar.

Eine erhebliche Kostensenkung kann durch die Verwendung von Wasserglas als Ausgangsmaterial für die Herstellung der SiO₂-Gele erreicht werden. Dazu kann beispielsweise aus einer wäßrigen Wasserglaslösung mit Hilfe eines lonenaustauscherharzes eine Kieselsäure hergestellt werden, die durch Zugabe einer Base zu einem SiO₂-Gel polykondensiert. Nach Austausch des wäßrigen Mediums gegen ein geeignetes organisches Lösungsmittel wird dann in einem weiteren Schritt das erhaltene Gel mit einem chlorhaltigen Silylierungsmittel umgesetzt. Als Silylierungsmittel werden dabei aufgrund ihrer Reaktivität ebenfalls bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend ebenfalls aus einem organischen Lösungsmittel heraus an der Luft getrocknet werden. Das auf dieser Technik basierende Herstellungsverfahren ist aus der DE-A-4 342 548 bekannt.

Jedoch fallen bei der Silylierung mittels chlorhaltiger Silylierungsmittel zwangsläufig in sehr großen Mengen Hydrogenchlorid (HCl) sowie eine Vielzahl damit verbundener Nebenprodukte an. Die durch die Entstehung sehr großer Mengen Hydrogenchlorid (HCl) notwendigen besonders korrosionsbeständigen Produktionsanlagen sind sehr teuer. Das mit der Entstehung sehr großer Mengen an HCl-Gas verbundene Sicherheitsrisiko bedarf noch zusätzlich einer sehr aufwendigen Technik und ist damit ebenfalls sehr kostenintensiv.

Eine Alternative zu der oben beschriebenen Silylierung mittels Methylchlorsilanen (Me₄₋ₙSiClₙ mit n = 1 bis 3) stellt die Verwendung chlorfreier Silylierungsmittel der allgemeinen Formel III dar: 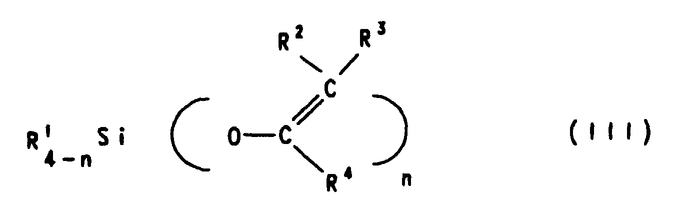 wobei
- R¹: gleich oder verschieden, ein linearer oder verzweigter C₁-C₆-Alkyl-Rest, ein Cyclohexyl-Rest oder Phenyl-Rest ist,
- R², R³ und R⁴: gleich oder verschieden, Wasserstoff-Atome, lineare oder verzweigte C₁-C₆-Alkyl-Reste, Cyclohexyl-Reste oder Phenyl-Reste sind, und n = 1, 2 oder 3 ist.

Ein Vertreter dieser Silylierungsmittel ist das Isopropenoxytrimethylsilan. Es spaltet bei der Silylierung Aceton als einziges Nebenprodukt ab. Dadurch läßt sich die Entstehung von Hydrogenchlorid (HCl) und das damit verbundene Sicherheitsrisiko vermeiden.
Das auf dieser Silylierungstechnik basierende Herstellungsverfahren wird ausführlich in der deutschen Patentanmeldung 195 02 453 beschrieben.

Da jedoch die oben beschriebenen chlorfreien Silylierungsmittel experimentell nur sehr aufwendig darzustellen und im industriellen Maßstab derzeit nicht verfügbar sind, ist die weiter oben beschriebene Problematik der sehr hohen Verfahrenskosten durch diese außerordentlich teuren chlorfreien Silylierungsmittel nicht gelöst.

Gemäß dem Journal of Chromatography, Band 11, Nr. 16, S 3375 und der US-A-5,110,784 werden Kieselgele, die für chromatographische Zwecke verwendet werden, z.B. mit Alkyl-Silyl-Acetamid silyliert.

Aufgabe der vorliegenden Erfindung war es daher, ein Verfahren zur Herstellung von organisch modifizierten SiO₂-Aerogelen bereitzustellen, das nicht die Nachteile aufweist, die sich aus dem Stand der Technik ergeben, wie zum Beispiel einerseits die Bildung von Abspaltungsprodukten oder gar Umsetzungsprodukten, die sowohl sicherheitstechnische als auch verfahrenstechnische Probleme aufweisen und andererseits die Verwendung von schwer zugänglichen und im industriellen Maßstab derzeit nicht verfügbaren Silylierungsmitteln, die ihrerseits außerordentlich hohe Verfahrenskosten verursachen.

Diese Aufgabe wird gelöst durch ein Verfahren zur Herstellung von organisch modifizierten Aerogelen, bei dem man
a) ein silikatisches Lyogel oder Hydrogel vorlegt,
b) gegebenenfalls das in Schritt a) hergestellte Gel einem ganz oder teilweisen Lösungsmitteltausch zu einem organischen Lösungsmittel unterwirft,
c) das in Schritt a) oder b) erhaltene Gel mit mindestens einem Silylierungsmittel umsetzt,
d) gegebenenfalls das in Schritt c) erhaltene silylierte Gel mit einem organischen Lösungsmittel wäscht, und
e) das in Schritt c) oder d) erhaltene Gel unterkritisch trocknet,
   das dadurch gekennzeichnet ist, daß man das in Schritt a) oder b) erhaltene Gel in Schritt c in Anwesenheit von Wasser mit mindestens einem chlorfreien Silylierungsmittel der Formel I und/oder II umsetzt, 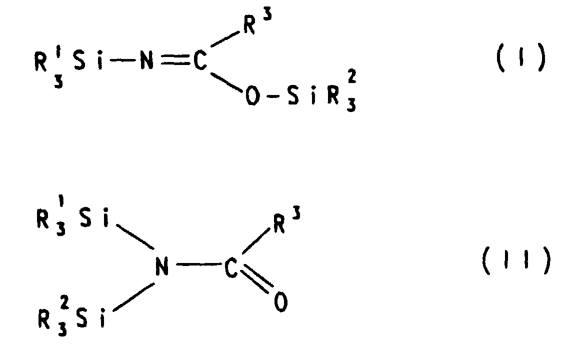 wobei
   - R¹, R², R³: unabhängig voneinander, gleich oder verschieden, ein Wasserstoffatom, ein linearer oder verzweigter C₁-C₆-Alkyl-, ein Cyclohexyl- oder Phenyl-Rest ist.

In einer bevorzugten Ausführungsform wird in Schritt a) ein silikatisches Lyogel vorgelegt, das durch Hydrolyse und Kondensation von Si-Alkoxiden in einem organischen Lösungsmittel mit Wasser erhältlich ist. Als Si-Alkoxid wird ein Tetraalkoxysilan, vorzugsweise Tetraethoxy- oder Tetramethoxysilan verwendet. Das organische Lösungsmittel ist dabei vorzugsweise ein Alkohol, besonders bevorzugt Ethanol oder Methanol, dem bis zu 20 Vol.-% Wasser zugesetzt sein können.
Bei der Hydrolyse und Kondensation der Si-Alkoxide in einem organischen Lösungsmittel mit Wasser können in einem ein- oder zweistufigen Schritt als Katalysatoren Säuren und/oder Basen zugesetzt werden.
In einer besonders bevorzugten Ausführungsform wird in Schritt a) ein silikatisches Hydrogel vorgelegt, das dadurch hergestellt wird, daß man eine wäßrige Wasserglaslösung mit Hilfe eines sauren lonenaustauscherharzes oder einer Mineralsäure auf einen pH-Wert ≤ 3 bringt, die dabei entstandene Kieselsäure durch Zugabe einer Base zu einem SiO₂-Gel polykondensiert und, falls eine Mineralsäure benutzt wurde, das Gel mit Wasser gegebenenfalls elektrolytfrei wäscht. Dabei wird im allgemeinen Natrium- und/oder Kaliumwasserglas verwendet. Als lonenaustauscherharz wird vorzugsweise ein saures Harz verwendet, wobei insbesondere solche geeignet sind, die Sulfonsäuregruppen enthalten. Falls Mineralsäuren einsetzt werden, sind vor allem Salzsäure und Schwefelsäure geeignet.
Als Base wird vorzugsweise NH₄OH, NaOH, KOH, Al(OH)₃ und/oder kolloidale Kieselsäure eingesetzt. Falls eine Mineralsäure verwendet wurde, sollte das mit Hilfe der Base erzeugte SiO₂-Gel gegebenenfalls mit Wasser elektrolytfrei gewaschen werden. Vorzugsweise wird dabei solange gewaschen, bis das ablaufende Waschwasser dieselbe elektrische Leitfähigkeit aufweist wie entmineralisiertes Wasser. Vor dem Waschen läßt man das Gel vorzugsweise altern, und zwar im allgemeinen bei 0 bis 150°C, vorzugsweise bei 80 bis 130°C, und einem pH-Wert von 4 bis 11, vorzugsweise 4 bis 9. Die Zeit dafür beträgt im allgemeinen 10 Sekunden bis 48 Stunden, vorzugsweise 10 Sekunden bis 5 Stunden.

Der Schritt a) wird im allgemeinen bei einer Temperatur zwischen dem Gefrierpunkt der Lösung und dem Siedepunkt des Lösungsmittels bzw. Lösungsmittelgemisches durchgeführt.

Als organische Lösungsmittel werden in Schritt b) im allgemeinen aliphatische Alkohole, Ether, Ester oder Ketone sowie aliphatische oder aromatische Kohlenwasserstoffe verwendet. Man kann auch Gemische aus den genannten Lösungsmitteln verwenden. Bevorzugte Lösungsmittel sind Methanol, Ethanol, Aceton, Tetrahydrofuran, Essigsäureethylester, Dioxan, n-Hexan, n-Heptan und Toluol. Besonders bevorzugt wird in Schritt b) Aceton als Lösungsmittel verwendet.

In Schritt c) wird das lösungsmittelhaltige Gel mit mindestens einem chlorfreien Silylierungsmittel der Formel I und/oder II umgesetzt, 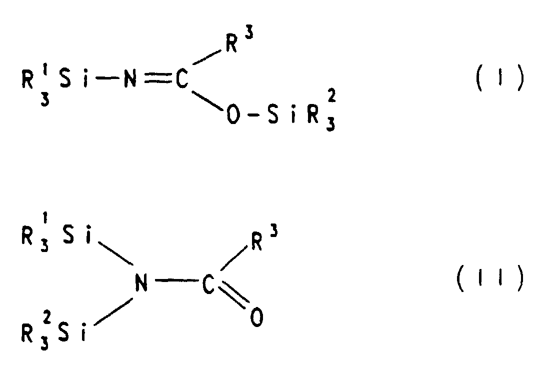 wobei
- R¹, R², R³: unabhängig voneinander, gleich oder verschieden, ein Wasserstoffatom, ein linearer oder verzweigter C₁-C₆-Alkyl-, ein Cyclohexyl- oder ein Phenyl-Rest ist.

Vorzugsweise ist R¹ und R² gleich oder verschieden, jeweils eine Methyl- oder Ethylgruppe und R³ ein Wasserstoffatom oder eine Methylgruppe.

Besonders bevorzugt ist N,O-Bis(trimethylsilyl)acetamid (Formel I: R¹ = R² = R³ = CH₃).

Die Umsetzung wird vorzugsweise bei 0 bis 100°C im wässrigen bzw. ganz oder teilweise wasserfreiem organischen Lösungsmittel durchgeführt, wobei man bevorzugt diejenigen Lösungsmittel verwendet, die auch beim Lösungsmitteltausch in Schritt b) eingesetzt werden. Besonders bevorzugt ist Aceton.

Die Silylierung kann gegebenenfalls mit katalytischen Mengen an Säure oder Base durchgeführt werden. Katalytische Mengen bedeutet, daß die Menge an Säure oder Base weniger als 1 Gew.-% bezogen auf das Naßgel beträgt. Als Säure wird dabei im allgemeinen eine gängige Säure wie z.B. HCl, H₂SO₄ oder Essigsäure verwendet, als Base eine gängige Base wie z.B. NH₄OH, NaOH, KOH oder Al(OH)₃. Es ist jedoch auch Trimethylchlorsilan (TMCS) geeignet. Die Silylierung kann gegebenenfalls auch unter Druck, vorzugsweise bis 25 bar, durchgeführt werden.

Bei der Umsetzung des Gels mit den erfindungsgemäßen, chlorfreien Silylierungsmitteln der Formel I und/oder II werden neutrale Amide gebildet. Bei der Verwendung von N,O-Bis(trimethylsilyl)acetamid ensteht auf diese Weise Acetamid als Abspaltungsprodukt, das in Wasser und dem bevorzugt verwendeten Aceton löslich ist.

Dadurch, daß das N,O-Bis(trimethylsilyl)acetamid in Anwesenheit von Wasser ein reaktives Silylierungsmittel darstellt, kann zumindest auf einen Teil des aufwendigen und kostenintensiven Lösungsmitteltauschs vor der Silylierung verzichtet werden.

Ein weiterer Vorteil des erfindungsgemäßen Verfahrens ist der, daß bei der Silylierung mit den erfindungsgemäßen, chlorfreien Silylierungsmitteln kein HCl-Gas entsteht, und deshalb auch keine korrosiven, chlorhaltigen Nebenprodukte.

In Schritt d) kann das silylierte Gel mit einem organischen Lösungsmittel gewaschen werden. Als organische Lösungsmittel werden im allgemeinen aliphatische Alkohole, Ether, Ester oder Ketone sowie aliphatische oder aromatische Kohlenwasserstoffe verwendet. Man kann auch Gemische aus den genannten Lösungsmitteln verwenden. Bevorzugte Lösungsmittel sind Methanol, Ethanol, Aceton, Tetrahydrofuran, Essigsäureethylester, Dioxan, n-Hexan, n-Heptan und Toluol. Besonders bevorzugt wird Aceton als Lösungsmittel verwendet.

In Schritt e) wird das gewaschene Gel unterkritisch getrocknet, vorzugsweise bei Temperaturen von -30 bis 200°C, besonders bevorzugt 0 bis 100°C, sowie Drücken vorzugsweise von 0,001 bis 20 bar, besonders bevorzugt 0,01 bis 5 bar, insbesondere 0,1 bis 2 bar, beispielsweise durch Strahlungs-, Konvektions-und/oder Kontakttrocknung. Die Trocknung wird vorzugsweise so lange fortgeführt, bis das GeI einen Lösungsmittel-Restgehalt von weniger als 0,1 Gew.-% aufweist. Die bei der Trocknung erhaltenen Aerogele sind dauerhaft hydrophob.

In einer weiteren Ausführungsform kann das Gel je nach Anwendung vor der Silylierung noch einer Netzwerkverstärkung unterworfen werden. Dies geschieht, indem man das erhaltene Gel mit einer Lösung eines zur Kondensation befähigten Orthosilikates der Formel R¹₄₋ₙSi(OR²)ₙ, vorzugsweise einem Alkyl- und/oder Arylorthosilikat, wobei n = 2 bis 4 ist und R¹ und R² unabhängig voneinander Wasserstoffatome, lineare oder verzweigte C₁-C₆-Alkyl-, Cyclohexyl- oder Phenyl-Reste sind, oder mit einer wäßrigen Kieselsäure-Lösung umsetzt.

Für viele Anwendungen von Aerogelen, bei denen vor der Oberflächenmodifikation weitere Komponenten zugesetzt werden, ist es besonders vorteilhaft, auf eine stark saure Silylierung, wie im Fall von Chlorsilanen, verzichten zu können, ohne die Funktion der Oberflächenmodifizierung einzubüßen.

Die durch das erfindungsgemäße Verfahren erhältlichen Aerogele finden vorzugsweise Verwendung als Wärmeisolationsmaterialien.

Das erfindungsgemäße Verfahren wird im folgenden anhand von Ausführungsbeispielen näher beschrieben, ohne jedoch dadurch beschränkt zu werden.

Die Wärmeleitfähigkeiten in den Beispielen werden mit einer Heizdrahtmethode (s. z.B. O. Nielsson, G. Rüschenpöhler, J. Groß, J. Fricke, High Temperatures - High Pressures, Vol. 21, 267-274 (1989)) gemessen.

### Beispiel 1

1 l einer Natriumwasserglaslösung (mit einem Gehalt von 8 Gew.-% SiO₂ und einem Na₂O:SiO₂ Verhältnis von 1:3,3) wird zusammen mit 0,5 l eines sauren lonenaustauscherharzes (Styroldivinylbenzolcopolymer mit Sulfonsäuregruppen, handelsüblich unter dem Namen ®Duolite C20) gerührt, bis der pH-Wert der wäßrigen Lösung 2,7 ist. Anschließend wird das lonenaustauscherharz abfiltriert und die wäßrige Lösung mit 1 molarer NaOH-Lösung auf einen pH-Wert von 5,0 eingestellt. Danach wird das entstandene Hydrogel 5 Stunden bei 85°C gealtert und anschließend das Wasser mit Aceton so lange extrahiert, bis der Wassergehalt im GeI unter 1 Gew.-% liegt. Anschließend wird das acetonhaltige Gel mit 5 Gew.-% N,O-Bis(trimethylsilyl)acetamid, 0,1 Gew.-% TMCS und einer äquimolaren Menge an Wasser (bezogen auf N,O-Bis(trimethylsilyl)acetamid) 3 Stunden bei 50°C silyliert (5 Gew.-% N,O-Bis(trimethylsilyl)acetamid und 0,1 Gew.-% TMCS bezogen auf das nasse Gel) und anschließend mit 3 l Aceton gewaschen. Die Trocknung des Gels erfolgt an Luft (3 Stunden bei 40°C, dann 2 Stunden bei 50°C und 12 Stunden bei 150°C).

Das so erhaltene, transparente Aerogel hat eine Dichte von 0,2 g/cm³. Die spezifische Oberfläche nach BET liegt bei 500 m²/g. Der λ-Wert liegt bei 0,018 W/mK.

### Beispiel 2

Die Herstellung des Hydrogels erfolgt wie im Beispiel 1 beschrieben. Danach wird das entstandene Hydrogel 5 Stunden bei 85°C gealtert und anschließend das Wasser mit Aceton so lange extrahiert, bis der Wassergehalt im Gel bei 25 Gew.-% liegt. Anschließend wird das acetonhaltige Gel mit 5 Gew.-% N,O-Bis(trimethylsilyl)acetamid und 0,1 Gew.-% TMCS 3 Stunden bei 50°C silyliert (5 Gew.-% N,O-Bis(trimethylsilyl)acetamid und 0,1 Gew.-% TMCS bezogen auf das nasse Gel) und anschließend mit 3 l Aceton gewaschen. Die Trocknung des Gels erfolgt an Luft (3 Stunden bei 40°C, dann 2 Stunden bei 50°C und 12 Stunden bei 150°C).

Das so erhaltene, transparente Aerogel hat eine Dichte von 0,25 g/cm³. Die spezifische Oberfläche nach BET liegt bei 560 m²/g. Der λ-Wert liegt bei 0,025 W/mK.

## Patentansprüche

1. Verfahren zur Herstellung von organisch modifizierten Aerogelen, bei dem man
a) ein silikatisches Lyogel oder Hydrogel vorlegt,
b) gegebenenfalls das in Schritt a) hergestellte Gel einem ganz oder teilweisen Lösungsmitteltausch zu einem organischen Lösungsmittel unterwirft,
c) das in Schritt a) oder b) erhaltene Gel mit mindestens einem Silylierungsmittel umsetzt,
d) gegebenenfalls das in Schritt c) erhaltene silylierte Gel mit einem organischen Lösungsmittel wäscht, und
e) das in Schritt c) oder d) erhaltene Gel unterkritisch trocknet,
dadurch gekennzeichnet, daß man das in Schritt a) oder b) erhaltene Gel in Schritt c) in Anwesenheit von Wasser mit mindestens einem chlorfreien Silylierungsmittel der Formel I und/oder II umsetzt, 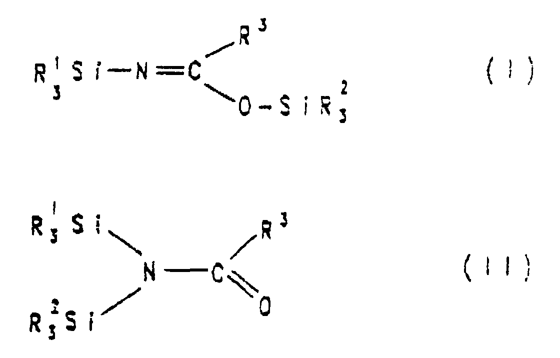 wobei
R¹, R², R³ unabhängig voneinander, gleich oder verschieden, ein Wasserstoffatom, ein linearer oder verzweigter C₁-C₆-Alkyl-, ein Cyclohexyl- oder ein Phenyl-Rest ist.

2. Verfahren gemäß Anspruch 1, dadurch gekennzeichnet, daß man ein silikatisches Lyogel vorlegt, das durch Hydrolyse und Kondensation von Si-Alkoxiden in einem organischen Lösungsmittel mit Wasser erhältlich ist.

3. Verfahren gemäß Anspruch 1, dadurch gekennzeichnet, daß man ein silikatisches Hydrogel vorlegt, das dadurch hergestellt wird, daß man eine wäßrige Wasserglaslösung mit Hilfe eines sauren lonenaustauscherharzes oder einer Mineralsäure auf einen pH-Wert ≤ 3 bringt, die dabei entstandene Kieselsäure durch Zugabe einer Base zu einem SiO₂-Gel polykondensiert und falls eine Mineralsäure benutzt wurde, das Gel mit Wasser elektrolytfrei wäscht.

4. Verfahren gemäß Anspruch 3, dadurch gekennzeichnet, daß man als Base NH₄OH, NaOH, KOH, Al(OH)₃ und/oder kolloidale Kieselsäure einsetzt.

5. Verfahren gemäß mindestens einem der Ansprüche 1 bis 4, dadurch gekennzeichnet, daß man das in Schritt a) erhaltene SiO₂-Gel bei 0 bis 150°C und einem pH-Wert von 4 bis 11 für eine Dauer von 10 Sekunden bis 48 Stunden altern läßt.

6. Verfahren gemäß mindestens einem der Ansprüche 1 bis 5, dadurch gekennzeichnet, daß man in Schritt b) als organisches Lösungsmittel Methanol, Ethanol, Aceton, Tetrahydrofuran, Essigsäureethylester, Dioxan, n-Hexan, n-Heptan und/oder Toluol einsetzt.

7. Verfahren gemäß mindestens einem der Ansprüche 1 bis 6, dadurch gekennzeichnet, daß man das in Schritt a) oder b) erhaltene Gel vor der Silylierung mit einer Lösung eines zur Kondensation befähigten Orthosilikates der Formel R¹₄₋ₙSi(OR²)ₙ, vorzugsweise einem Alkyl- und/oder Arylorthosilikat, wobei n = 2 bis 4 ist und R¹ und R² unabhängig voneinander Wasserstoffatome, lineare oder verzweigte C₁-C₆-Alkyl-, Cyclohexyl- oder Phenyl-Reste sind, oder mit einer wäßrigen Kieselsäure-Lösung umsetzt.

8. Verfahren gemäß mindestens einem der Ansprüche 1 bis 7, dadurch gekennzeichnet, daß man in Schritt c) das lösungsmittelhaltige Gel mit mindestens einem chlorfreien Silylierungsmittel der Formel I und/oder II umsetzt, wobei R¹ und R², gleich oder verschieden, jeweils eine Methyl- oder Ethylgruppe und R³ ein Wasserstoffatom oder eine Methylgruppe ist.

9. Verfahren gemäß Anspruch 8, dadurch gekennzeichnet, daß man in Schritt c) das lösungsmittelhaltige Gel mit N,O-Bis(trimethylsilyl)acetamid umsetzt.

10. Verfahren gemäß mindestens einem der Ansprüche 1 bis 9, dadurch gekennzeichnet, daß man die Umsetzung in Schritt c) in Gegenwart katalytischer Mengen an Säure oder Base durchführt.

11. Verfahren gemäß mindestens einem der Ansprüche 1 bis 10, dadurch gekennzeichnet, daß man die Umsetzung in Schritt c) in einem organischen Lösungsmittel bei einer Temperatur im Bereich von 0 bis 100°C durchführt.

12. Verfahren gemäß mindestens einem der Ansprüche 1 bis 11, dadurch gekennzeichnet, daß man die Silylierung unter Druck durchführt.

13. Verfahren gemäß mindestens einem der Ansprüche 1 bis 12, dadurch gekennzeichnet, daß man das erhaltene silylierte Gel in Schritt d) mit einem protischen oder aprotischen Lösungsmittel wäscht, bevor man es in Schritt e) trocknet.

14. Verfahren gemäß mindestens einem der Ansprüche 1 bis 13, dadurch gekennzeichnet, daß man in Schritt e) das silylierte Gel bei -30 bis 200°C und 0,001 bis 20 bar trocknet.

## Claims

1. A method of producing organically modified aerogels, in which
a) a silicated lyogel or hydrogel is provided,
b) possibly the gel produced in step a) is subjected to an entire or partial solvent exchange to produce an organic solvent,
c) the gel obtained in step a) or b) is reacted with at least one silylating agent,
d) possibly the silylated gel obtained in step c) is washed with an organic solvent, and
e) the gel obtained in step c) or d) is dried under subcritical conditions,
characterised in that the gel obtained in step a) or b) is, in the presence of water, reacted with at least one chlorine-free silylating agent to formula 1 or 11, in which 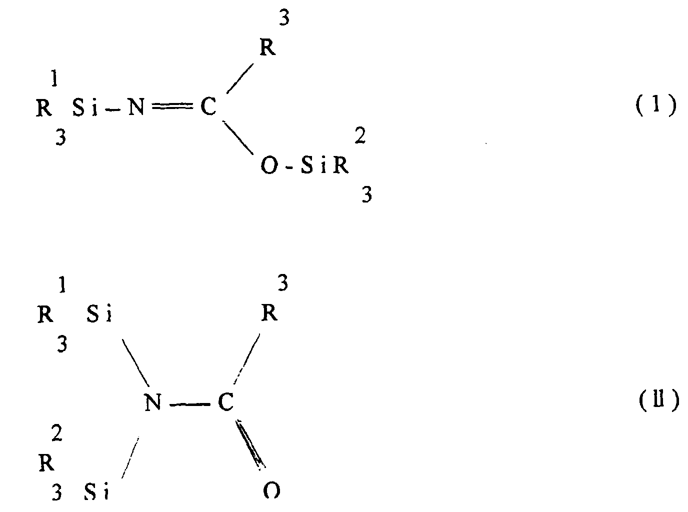 in which
R¹, R², R³ independently of one another, identical or different, is a hydrogen atom, a linear or branched C₁-C₆-alkyl-, a cyclohexyl- or a phenyl radical.

2. A method according to claim 1, characterised in that a silicated lyogel is provided which is obtainable by hydrolysis and condensation from Si-alkoxides in an organic solvent with water.

3. A method according to claim 1, characterised in that a silicated hydrogel is provided which is produced by bringing an aqueous water glass solution to a pH value ≤3 by means of an acid ion exchanger resin or a mineral acid, the silicic acid produced thereby being polycondensed by the addition of a base to produce an SiO₂ gel and, if a mineral acid was used, the gel is washed electrolyte-free with water.

4. A method according to claim 3, characterised in that NH₄OH, NaOH, KOH, A1(OH)₃ and/or colloidal silicic acid is used as the base.

5. A method according to at least one of claims 1 to 4, characterised in that the SiO₂ gel obtained in step a) is allowed to age for a period of 10 seconds to 48 hours at 0 to 150°C and a ph value of 4 to 11.

6. A method according to at least one of claims 1 to 5, characterised in that in step b) methanol, ethanol, acetone, tetrahydrofuorane, acetic acid ethyl ester, dioxane, n-hexane, n-heptane and/or toluene is used as the organic solvent.

7. A method according to at least one of claims 1 to 6, characterised in that the gel obtained in step a) or b) is, prior to silylation, reacted with a solution of an orthosilicate capable of condensation, to formula R¹₄₋ₙSi(OR²)ₙ, preferably an alkyl and/or aryl orthosilicate in which n = 2 to 4 and R¹ and R², independently of each other, are hydrogen atoms, linear or branched C₁-C₆-alkyl, cyclohexyl or phenyl radicals or is reacted with an aqueous silicic acid solution.

8. A method according to at least one of claims 1 to 7, characterised in that, in step c), the solvent-containing gel is reacted with at least one chlorine-free silylating agent to formula 1 and/or 11, in which R¹ and R², identical or different, is in each case a methyl or ethyl group and R³ is a hydrogen atom or a methyl group.

9. A method according to claim 8, characterised in that in step c) the solvent-containing gel is reacted with N,O-bis(trimethyl silyl)acetamide.

10. A method according to at least one of claims 1 to 9, characterised in that the reaction in step c) is conducted in the presence of catalytic quantities of acid or base.

11. A method according to at least one of claims 1 to 10, characterised in that the reaction in step c) is carried out in an organic solvent at a temperature in the range from 0 to 100°C.

12. A method according to at least one of claims 1 to 11, characterised in that silylation is carried out under pressure.

13. A method according to at least one of claims 1 to 12, characterised in that the silylated gel obtained is in step d) washed with a protic or aprotic solvent before it is dried in step e).

14. A method according to at least one of claims 1 to 13, characterised in that in step e) the silylated gel is dried at -30 to 200°C and 0.001 to 20 bars.

## Revendications

1. Procédé de production d'aérogels organiquement modifiés, dans lequel :
a) on se procure un lyogel ou hydrogel au silicate ;
b) facultativement, on soumet le gel produit à l'étape a) à un échange de solvants total ou partiel contre un solvant organique ;
c) on fait réagir le gel obtenu à l'étape a) ou b) avec au moins un agent de silylation ;
d) facultativement, on lave le gel silylé obtenu à l'étape c) avec un solvant organique ; et
e) on effectue une dessiccation sous-critique du gel silylé obtenu à l'étape c) ou d),
caractérisé en ce que, à l'étape c), on fait réagir le gel obtenu à l'étape a) ou b) en présence d'eau avec au moins un agent de silylation exempt de chlore de formule I et/ou II 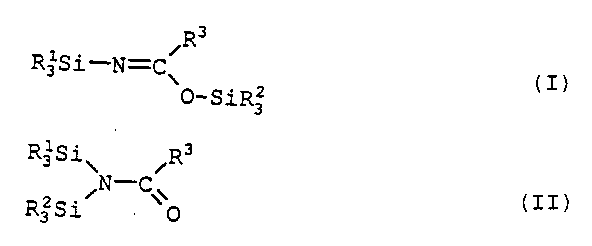 dans lesquelles :
R¹, R² et R³ sont, indépendamment l'un de l'autre, identiques ou différents, un atome d'hydrogène, un résidu alkyle en C₁ à C₆ linéaire ou ramifié, un résidu cyclohexyle ou un résidu phényle.

2. Procédé selon la revendication 1, caractérisé en ce que l'on se procure un lyogel au silicate pouvant être obtenu par hydrolyse et condensation d'alcoxydes de Si dans un solvant organique avec de l'eau.

3. Procédé selon la revendication 1, caractérisé en ce que l'on se procure un hydrogel au silicate qui est préparé en amenant une solution aqueuse de verre soluble à pH ≤ 3 à l'aide d'une résine échangeuse d'ions acide ou d'un acide minéral, en polycondensant l'acide silicique ainsi obtenu en un gel de SiO₂ par ajout d'une base et, dans le cas où un acide minéral a été employé, en lavant le gel avec de l'eau jusqu'à ce qu'il soit exempt d'électrolytes.

4. Procédé selon la revendication 3, caractérisé en ce que la base utilisée est NH₄OH, NaOH, KOH, Al(OH)₃ et/ou de l'acide silicique colloïdal.

5. Procédé selon l'une au moins des revendications 1 à 4, caractérisé en ce qu'on laisse vieillir le gel de SiO₂ obtenu à l'étape a) à une température de 0 à 150°C et à un pH de 4 à 11 pendant une durée de 10 secondes à 48 heures.

6. Procédé selon l'une au moins des revendications 1 à 5, caractérisé en ce que le solvant organique utilisé à l'étape b) est le méthanol, l'éthanol, l'acétone, le tétrahydrofurane, l'acétate d'éthyle, le dioxane, le n-hexane, le n-heptane et/ou le toluène.

7. Procédé selon l'une au moins des revendications 1 à 6, caractérisé en ce que, avant la silylation, on fait réagir le gel obtenu à l'étape a) ou b) avec une solution d'un orthosilicate apte à la condensation, de formule R¹₄₋ₙSi(OR²)ₙ, de préférence un orthosilicate d'alkyle et/ou d'aryle, formule dans laquelle n = 2 à 4 et R¹ et R² sont, indépendamment l'un de l'autre des atomes d'hydrogène, des résidus alkyle en C₁ à C₆ linéaires ou ramifiés, des résidus cyclohexyle ou des résidus phényle, ou bien avec une solution aqueuse d'acide silicique.

8. Procédé selon l'une au moins des revendications 1 à 7, caractérisé en ce que, à l'étape c), on fait réagir le gel contenant du solvant avec au moins un agent de silylation exempt de chlore de formule I et/ou II, dans laquelle R¹ et R², identiques ou différents, représentent chacun un groupe méthyle ou éthyle et R³ représente un atome d'hydrogène ou un groupe méthyle.

9. Procédé selon la revendication 8, caractérisé en ce que, à l'étape c), on fait réagir le gel contenant du solvant avec du N,O-bis(triméthylsilyl)acétamide.

10. Procédé selon l'une au moins des revendications 1 à 9, caractérisé en ce que la réaction à l'étape c) se fait en présence de quantités catalytiques d'acide ou de base.

11. Procédé selon l'une au moins des revendications 1 à 10, caractérisé en ce que la réaction à l'étape c) se fait dans un solvant organique à une température dans la plage de 0 à 100°C.

12. Procédé selon l'une au moins des revendications 1 à 11, caractérisé en ce que la silylation se fait sous pression.

13. Procédé selon l'une au moins des revendications 1 à 12, caractérisé en ce qu'on lave le gel silylé obtenu à l'étape d) avec un solvant protique ou aprotique avant de le sécher à l'étape e).

14. Procédé selon l'une au moins l'une des revendications 1 à 13, caractérisé en ce que, à l'étape e), on sèche le gel silylé à une température de -30 à 200°C et sous une pression de 0,001 à 20 bars.
